(19) Europäisches Patentamt
European Patent Office
Office européen des brevets

(11) EP 2 741 233 A2

## (12) EUROPEAN PATENT APPLICATION

(43) Date of publication:
11.06.2014 Bulletin 2014/24

(51) Int Cl.:
G06K 9/00 (2006.01)

(21) Application number: 13195551.0

(22) Date of filing: 03.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.12.2012 CN 201210513215

(71) Applicant: Ricoh Company, Ltd.
Tokyo 143-8555 (JP)

(72) Inventors:
• Chen, Chao
100044 Haidian District (CN)

• Shi, Zhongchao
100044 Haidian District (CN)
• Lu, Yaojie
100044 Haidian District (CN)
• You, Ganmei
100044 Haidian District (CN)
• Wang, Gang
100044 Haidian District (CN)

(74) Representative: Maury, Richard Philip
Marks & Clerk LLP
90 Long Acre
London
WC2E 9RA (GB)

## (54) Method and apparatus for detecting road

(57) A method and an apparatus for detecting a road are disclosed. The method comprises the steps of obtaining a V-disparity map with the road; and extracting a line segment as the road from the V-disparity map, wherein the step of extracting the line segment as the road from the V-disparity map includes estimating the road line segment by a limited Hough transform. According to the method and the apparatus for detecting the road based on the limited Hough transform, noise can be removed, the computational complexity can be reduced, road points can be purposefully processed, the road can be enhanced, and the road can be detected accurately.

FIG.2

1000

START

S1100

OBTAINING V-DISPARITY MAP WITH ROAD

S1200

EXTRACTING LINE SEGMENT AS ROAD FROM V-DISPARITY MAP, WHEREIN ROAD LINE SEGMENT IS ESTIMATED BY LIMITED HOUGH TRANSFORM

END

EP 2 741 233 A2

**Description**

## BACKGROUND OF THE INVENTION

### 1. Field of the Invention

The present invention generally relates to image processing, and specifically, a method and an apparatus for detecting a road.

### 2. Description of the Related Art

The application of the driving assistance system is becoming more popular. The LDW/RDW (Lane/Road detection warning) system, a subsystem of the driving assistance system, can avoid collisions and help to determine driving directions accurately. The road detection is very important for the LDW/RDW system, because only by knowing road information can a further process such as warning be performed. Additionally, the road detection is also an important part of a 3D (three-dimensional) driving environment understanding technology, and has a great effect on roadside guardrail detection, vanishing point detection, vehicle recognition, etc., in the 3D driving environment understanding technology.

A stereo camera is widely used, because it has an advantage in that a disparity and a distance map with high precision can be obtained. One of the tasks of 3D road scene analysis is the plane detection of the road surface. However, the prior method is not applicable to a complex environment and is easily disturbed by noise.

In the non-patent document ("U-V-Disparity based Obstacle Detection with 3D Camera and Steerable Filter", Y.Gao, X.Ai, Y.Wang, J.Rarity and N.Dahnoun, 2011 IEEE Intelligent Vehicles Symposium), a method for detecting a road is disclosed. In this method, depth information is obtained by means of a 3D camera, thereby obtaining a U-V disparity map, and features of a straight line are extracted by a Hough transform so as to detect a road.

In patent document EP762326B1 in which the title of the invention is "Object Detecting Apparatus in Which the Position of a Planar Object Is Estimated by Using Hough Transform", a method for directly processing original disparity data to estimate a planar object by using the Hough transform is disclosed.

## SUMMARY OF THE INVENTION

Through the analysis and the experiment of the applicant of the present invention, it was discovered that the conventional road detection algorithm is not suitable for a road detection in complex environments. For example, the least squares method is sensitive to noise, so that, only a little noise may make the estimated road deviate from the true road position; on the other hand, the conventional Hough transform merely considers the number of points passing through a straight line, so that it is possible that the road is affected by guardrails, irrigation ditches, etc., and a misdetection is generated if the road is weak.

The present invention is made in light of the above problems.

It is one of objects of the present invention to improve robustness of the road detection so as to be suitable for road detection in a complex environment.

According to an aspect of the present invention, a method for detecting a road comprises the steps of: obtaining a V-disparity map with the road; and extracting a line segment as the road from the V-disparity map, wherein the step of extracting the line segment as the road from the V-disparity map includes estimating the road line segment by a limited Hough transform.

According to another aspect of the present invention, an apparatus for detecting a road, comprises: a V-disparity map obtainment unit configured to obtain a V-disparity map with the road; and a road line segment extraction unit configured to extract a line segment as the road from the V-disparity map, wherein the road line segment extraction unit estimates the road line segment by a limited Hough transform.

According to the method and the apparatus for detecting the road based on the limited Hough transform, the noise can be removed, the computational complexity can be reduced, road points can be purposefully processed, the road can be enhanced, and the road can be detected accurately.

## BRIEF DESCRIPTION OF THE DRAWINGS

FIG. 1 is a schematic drawing illustrating an in-car system as an example of an application environment of the present invention, which may facilitate the understanding of the present invention;

FIG. 2 is an overall flowchart illustrating the method for detecting the road according to an embodiment of the present invention;

FIG. 3(a) is a schematic drawing illustrating a disparity map of the road area picked up by an in-car stereo camera, and FIG. 3(b) is a schematic drawing illustrating a V-disparity map converted from the disparity map illustrated in FIG. 3(a);

FIG. 4 is a schematic drawing illustrating a road model established by three linear line segments represent a near vision region, an intermediate vision region and a far vision region according to an embodiment of the present invention, respectively;

FIG. 5 is a schematic drawing illustrating an accumulative space of a Hough transform limited to a small area;

FIGs. 6 (a) and 6(b) are schematic drawings illustrating an ideal Hough straight line cluster and an actual Hough straight line cluster of points on the road in a Hough space, respectively;

FIG. 7 is a schematic drawing illustrating a comparison of the Hough straight line cluster before and after clustering and simplifying processes, where FIG. 7(a) represents the original Hough straight line cluster before the clustering and simplifying processes have been performed, and FIG. 7(b) represents the Hough straight line cluster after the clustering and simplifying processes have been performed;

FIGs. 8(a) and 8(b) are schematic drawings illustrating calculation of the distance between the extracted Hough transform line segment and a horizontal plane corresponding line, and the selected road line segment according to an embodiment of the present invention, respectively;

FIG. 9 is an overall flowchart illustrating the method for detecting the road according to an embodiment of the present invention;

FIG. 10 is a flowchart illustrating the method of filtering the V-disparity map to select road candidate points according to an embodiment of the present invention;

FIG. 11 is a schematic drawing illustrating the V-disparity map before and after filtering, where FIG. 11(a) is the V-disparity map before filtering, and FIG. 11(b) is the V-disparity map after filtering;

FIG. 12 is a flowchart illustrating the method for detecting the road according to the third embodiment of the present invention;

FIGs. 13(a) and 13(b) are schematic drawings illustrating a road line segment detected from the V-disparity map and the corresponding road in the original disparity map by inverse mapping, respectively;

FIGs. 14(a) and 14(b) are schematic drawings illustrating the comparison of experimental results of road detections based on the detection by the limited Hough transform according to the embodiment of the present invention, and the detection by the conventional least squares method, which are applied to two road scenes;

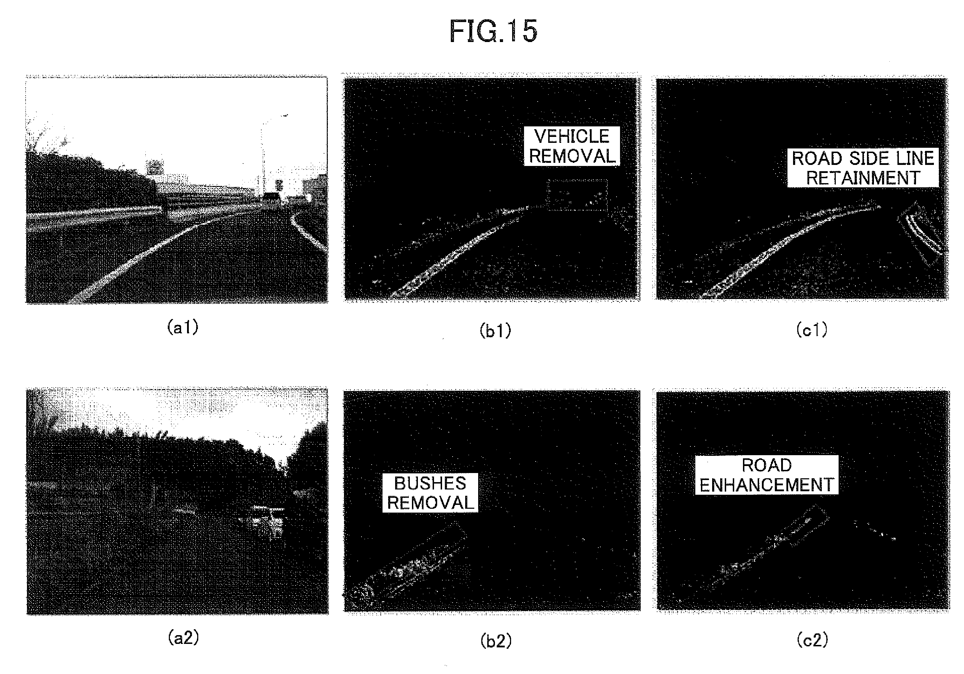

FIGs. 15(a1), 15(b1), 15(c1), 15(a2), 15(b2) and 15(c2) are schematic drawings illustrating the comparison of original gray-scale maps, a road detected by the conventional detection method that is shown in an original disparity map, and a road detected by the method based on the limited Hough transform according to the embodiment of the present invention that is shown in the original disparity map, where FIG. 15(a1) illustrates an original gray-scale map, FIG. 15(b1) illustrates the road detected by the conventional detection method that is shown in the original disparity map, FIG. 15(c1) illustrates the road detected by the method based on the limited Hough transform according to the embodiment of the present invention that is shown in the original disparity map, FIG. 15(a2) illustrates an original gray-scale map, FIG. 15(b2) illustrates the road detected by the conventional detection method that is shown in the original disparity map, and FIG. 15(c2) illustrates the road detected by the method based on the limited Hough transform according to the embodiment of the present invention that is shown in the original disparity map;

FIG. 16 is a block diagram illustrating an apparatus for detecting the road according to an embodiment of the present invention; and

FIG. 17 is a conceptual diagram illustrating a hardware configuration of a road detection system according to the embodiments of the present invention.

## DETAILED DESCRIPTION OF THE PREFERRED EMBODIMENTS

In the following, embodiments of the present invention are described in detail with reference to the accompanying drawings, so as to facilitate the understanding of the present invention. Additionally, in order to avoid any confusion with the gist of the present invention, the prior art is not described in detail.

The embodiments of the present invention are described in the following order:

1. Introduction of Essential Concepts
2. First Embodiment of Road Detection Method 2.1. Overall Flow of Road Detection Method
2.2. Example 1: limitation of Accumulative Space of Hough Transform
2.3. Example 2: Limitation of Conversion Range of Hough Transform
2.4. Example 3: Setting of Accumulative Weight Value of Hough Transform 2.5. Example 4: Clustering of Hough Straight Line Cluster

2.6. Example 5: Simplification of Hough Straight Line Cluster

2.7. Example 6: Selection of Hough Straight Line Based on Horizontal Distance 3. Second Embodiment of Road Detection Method

4. Third Embodiment of Road Detection Method

5. Road Detection Apparatus

6. System Hardware Configuration

7. Summary

<1. Introduction of Essential Concepts>

The essential concepts will be introduced as follows, so as to facilitate the understanding of the present invention.

"Disparity" indicates an angle made by two straight lines that are drawn from opposite ends of a base line to a distant object. In general, it means a direction difference generated by looking at the same object from two points having a certain separation distance. The angle that is generated by looking at the two points from the object is called a disparity angle of the two points, and the distance between the two points is called a basic line. A distance between the object and an observer can be calculated as long as the disparity angle and length of the basic line are known.

"Disparity map" is an image that is based on a reference image, the size of the disparity, and the size of the reference image; and an element value of the disparity map is a disparity value. The disparity map includes distance information of a scene. The disparity map may be computed from left and right images picked up by a binocular camera or computed from a depth map of a stereogram.

The coordinates of a point of a common two dimensional disparity map are denoted by $(u,v)$, where u is abscissa and v is ordinate; the value of the pixel at the point $(u,v)$ is denoted by $d(u,v)$, and represents the disparity of the point $(u,v)$.

The V-disparity map may be regarded as a side view of the disparity map and the U-disparity map may be regarded as a top view of the disparity map, so as to facilitate the understanding. The V-disparity map may be computed from the disparity map. The gray-scale of any point $(d,v)$ of the V-disparity map is the number of the points of the corresponding disparity map where the ordinate is v and the disparity value is equal to d.

"Hough transform": in the polar coordinate form, a straight line passing through a data point may be denoted by an angle $\theta$ and a distance p as $p=x\cos\theta+y\sin\theta$, so that, parameters p and $\theta$ of a straight line passing through the most points can be found by the Hough transform. A point within an image corresponds to a curve with a parameter space, and a straight line within the image corresponds to a point within the parameter space. After a Hough transform is performed for all points in the image, a straight line to be detected corresponds to the point that the most curves intersect in the parameter space. The parameter space of the Hough transform is also called as "accumulative space" sometimes, because the number of curves passing through each of points within the parameter space of the Hough transform are accumulated. Furthermore, the parameter space of the Hough transform is also called "searching space" sometimes, because it is necessary to search for the point where the most curves intersect within the parameter space of the Hough transform. In the specification, the parameter space of the Hough transform (or the Hough parameter space), the accumulative space and the searching space may be used interchangeably except in special cases.

<2. First Embodiment of Road Detection Method >

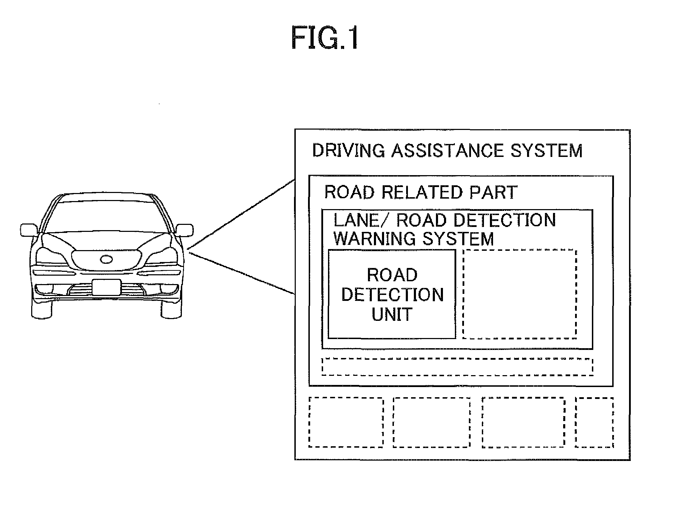

FIG. 1 is a schematic drawing illustrating an in-car system as an example of an application environment of the present invention, which may facilitate the understanding of the present invention. The software or hardware application may be implemented as the road detection unit of the system.

<2.1. Overall Flow of Road Detection Method>

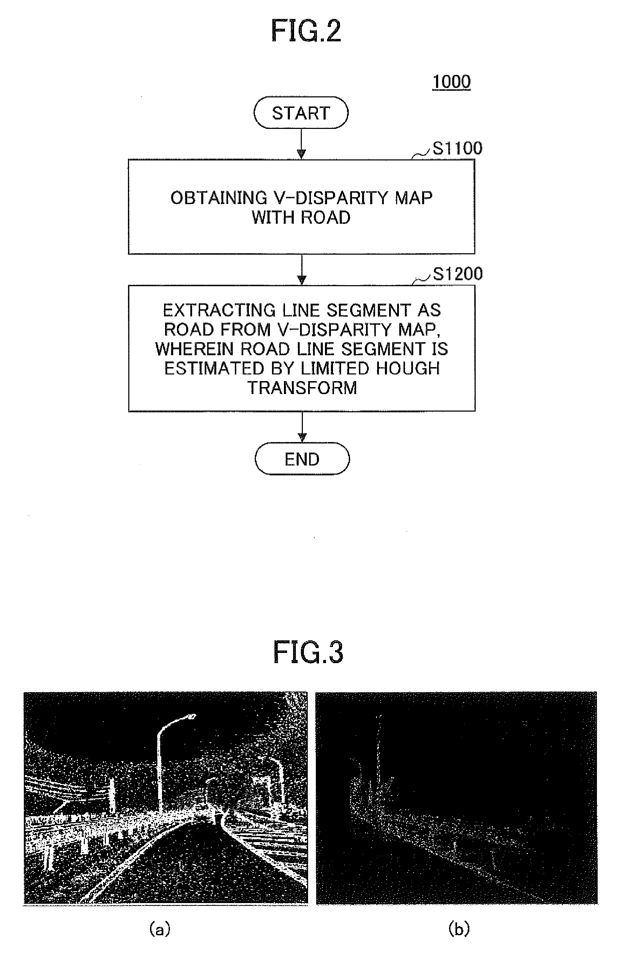

FIG. 2 is an overall flowchart illustrating the method for detecting the road 1000 according to an embodiment of the present invention.

In step S1100, a V-disparity map with the road is obtained. The disparity map including a road area may be obtained by picking-up by a binocular camera, a multi-camera, or a stereo camera and computing, and the V-disparity map is obtained by converting the disparity map; or the disparity map may be obtained from a depth map that is obtained from a stereo image, and the V-disparity map is obtained by converting the disparity map.

FIG. 3(a) is a schematic drawing illustrating a disparity map of the road area picked up by an in-car stereo camera, and FIG. 3(b) is a schematic drawing illustrating a V-disparity map converted from the disparity map illustrated in FIG. 3(a).

As described above, the disparity map is obtained and the V-disparity map is obtained from the disparity map. However, this is just an example, and the V-disparity map may be obtained directly by processing or computing an image obtained by a camera such as a binocular camera.

Additionally, in an embodiment, a denoising process may be performed for the disparity map or the V-disparity map.

In step S1200, a line segment is extracted as the road from the V-disparity map, wherein the road line segment is estimated by a limited Hough transform.

In an embodiment, the step of extracting the line segment as the road from the V-disparity map includes extracting the segmented line segments as the road from the V-disparity map in the descending order of the disparity, namely, the order of the distance (with respect to the camera mounted on the vehicle) from near to far, wherein the line segments are obtained by estimating by the limited Hough transform, and an initial straight line parameter of the subsequent line segment is limited by an estimated straight line parameter of the previous line segment.

With respect to the step of extracting the segmented line segments as the road from the V-disparity map, it may refer to the technology of the Chinese patent application by the inventor YouGanmei, et al., for which the application No. is CN201110434873.X, and the entire contents of which are hereby incorporated by reference.

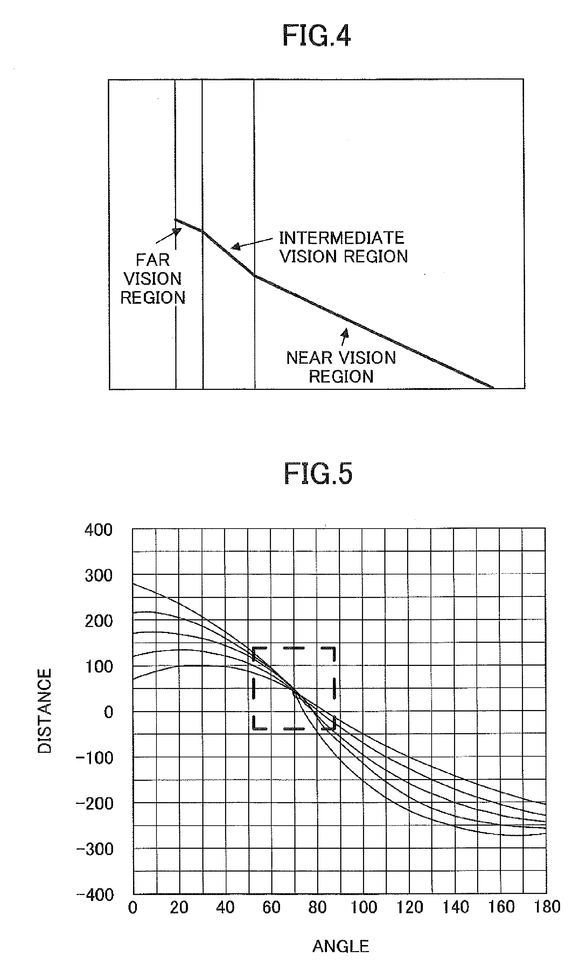

FIG. 4 is a schematic drawing illustrating a road model established by three linear line segments represent a near vision region, an intermediate vision region and a far vision region according to an embodiment of the present invention, respectively. It should be noted that, in this drawing and other V-disparity maps of the present invention, the coordinate origin is located at the upper left corner, the horizontal axis represents the disparity and extends from left to right, and the vertical axis represents the height V and extends from top to bottom.

According to an embodiment of the present invention, the segmentation linear road model is divided into three part of near, intermediate and far, which represent road states at a near distance (or near vision region), an intermediate distance (or intermediate vision region) and a far distance (far vision region), respectively. In the model of this embodiment, the lengths of the road line segments are self-adaptive, for example, the lengths of the road line segments are determined by detecting the number of points that are located on the line segment in a region; therefore, the detection accuracy is further improved and the adaptability for different types of roads is robust.

It should be noted that, in the embodiment of the present invention, the road detection algorithm is based on a segmentation linear road model; however, the road model is not limited to the segmentation linear road model; for example, a quadratic curve model may also be created to detect a quadratic curve from the image as necessary. An uphill or a downhill may appear, namely, the side outline of the road may be a curve form, since the road is not always flat. However, the computational complexity would be large and it is easily affected by noise, if a curve model is used to describe the road. Accordingly, the road detection is made faster and more robust by using the segmentation linear road model according to the present invention.

As described above, the technology for extracting a line segment from a V-disparity map by a Hough transform to estimate a surface has been disclosed in prior art. However, it was discovered that there are many problems in the method for extracting a line segment from a V-disparity map by a simple Hough transform directly. First, the computational complexity is high and the execution speed is slow, since a conversion and accumulation is performed in the whole Hough transform space; second, it is easily affected by noise such as roadside guardrails, irrigation ditches, etc. In order to solve such problems or insufficiencies, a method for estimating a road in a complex environment by a limited Hough transform is provided in an embodiment of the present invention. With respect to the method for estimating the road by the simple Hough transform, the method can be obtained from the Chinese patent application by the same inventor ChenChao, et al., of which the application No. is CN201210194074.4, and the entire contents of which are hereby incorporated by reference.

Examples of the method for estimating the road line segment by the limited Hough transform may be described as follows.

<2.2. Example 1: limitation of Accumulative Space of Hough Transform>

According to an embodiment, the accumulative space (searching space) of the Hough transform may be limited by the prior knowledge.

According to an embodiment, the V-disparity map with the road is obtained from a stereo image picked up by a stereo camera fixed on a vehicle. For example, a binocular camera is mounted on the top of the vehicle, and the disparity map is obtained from the picked up left and right images. The V-disparity map may be converted from such disparity map.

Accordingly, a region range and an inclination angle range within the V-disparity map on which the road within the real three-dimensional environment is mapped, may be determined based on a parameter of the camera.

The parameter includes an internal parameter and an external parameter. The external parameter may be the height from the road surface to the camera, a distance between the left and the right camera center points of a binocular camera, or an included angle between an image plane and the road. The internal parameter may be the focal length of the camera. By using such prior knowledge, the detection region of the road within the V-disparity map and the inclination angle range of the road straight line may be determined based on mathematical calculation. That is to say, the value ranges of p and θ in the polar coordinate form of the road line segment within the V-disparity map ρ=xcosθ+ysinθ are determined. Thus, the accumulative space (namely, searching space) of the Hough transform is limited based on the value ranges of the parameters.

FIG. 5 is a schematic drawing illustrating an accumulative space of a Hough transform limited to a small area, in which the accumulative space of the Hough transform is limited to the area illustrated by the dotted rectangle.

Furthermore, according to another embodiment, the accumulative space of the Hough transform may also be limited by trace information. As the reason, the road does not change suddenly while the vehicle is running continuously; therefore, in the method of the embodiment, historical information (for example, the last frame or the last few frames) may be used as the trace information to estimate detection parameters (angle and distance) of the next frame.

According to the embodiment of the present invention, the searching space of the Hough transform is reduced effectively by the prior knowledge and/or historical information as described above, so that the noise interference can be avoided and the processing time can be reduced.

<2.3. Example 2: Limitation of Conversion Range of Hough Transform>

In an embodiment, the conversion range of the Hough transform is limited by the limited Hough transform so as to accelerate the conversion process.

As described above, a polar coordinate function according to the Hough transform of the line segment within the V-disparity map corresponding to the road is denoted by the following equation

$$\rho = x \cdot \cos(\theta) + y \cdot \sin(\theta)$$

, where x represents abscissa of a point on the corresponding line segment within the V-disparity map and represents disparity value, y represents ordinate of the point on the corresponding line segment within the V-disparity map and represents the height in the image coordinates, and parameter values of the line segment within the V-disparity map corresponding to the road satisfy

$$x > 0, \quad y > 0, \quad \theta \in (\pi/2, \pi)$$

, so that, the following equation is derived

$$\frac{d\rho}{d\theta} = -x \cdot \sin(\theta) + y \cdot \cos(\theta) < 0$$

, namely, the polar coordinate function of the road within the V-disparity map is a monotone decreasing function in the parameter value range. Therefore, with respect to the value range of p and θ, the conversion range may be controlled by the following steps while the Hough transform is performed for a pixel within the image:

supposing that the Hough transform is performed by the way of finding p based on the known θ, a conversion of the Hough transform for a pixel is stopped and the next pixel within the V-disparity map is converted from an image space to a Hough space if p is less than a predetermined lower limit of the value range of p in cases where the pixel is converted by the Hough transform in the ascending order of θ, or a conversion of the Hough transform for a pixel is stopped and the next pixel within the V-disparity map is converted from an image space to a Hough space if p is greater than a predetermined upper limit of the value range of p in cases where the pixel is converted by the Hough transform in the descending order of θ, or

supposing that the Hough transform is performed by the way of finding θ based on the known p, a conversion of the Hough transform for a pixel is stopped and the next pixel within the V-disparity map is converted from an image space to a Hough space if θ is less than a predetermined lower limit of the value range of θ in cases where the pixel is converted by the Hough transform in the ascending order of p, or a conversion of the Hough transform for a pixel is stopped and the next pixel within the V-disparity map is converted from an image space to a Hough space if θ is greater than a predetermined upper limit of the value range of θ in cases where the pixel is converted by the Hough transform in the descending order of p.

From above, according to the embodiment of the present invention, the mapping process can be accelerated and the processing time can be reduced by using the characteristics that the polar coordinate function of the real road within the V-disparity map is a monotone decreasing function in the above parameter value range.

<2.4. Example 3: Setting of Accumulative Weight Value of Hough Transform>

According to an embodiment, an accumulative weight of a curve within a parameter space of the Hough transform that corresponds to a pixel within the V-disparity map may be set, based on an intensity value of the pixel.
As described above, the intensity value of the pixel within the V-disparity map represents the number of the accumulated points with the same y coordinate and the disparity in the original disparity map. In the road detection application according to the embodiment of the present invention, since the noise points are distributed relatively, the accumulated value is small, i.e., the intensity value within the V-disparity map is low; meanwhile, since the road points are concentrated, the accumulated value is large, i.e., the intensity value within the V-disparity map is high. Therefore, in the embodiment of the present invention, it is possible to emphasize the importance of active road points in the conversion so as to improve the detection accuracy by setting the intensity value as the accumulative weight of the Hough transform.

<2.5. Example 4: Clustering of Hough Straight Line Cluster>

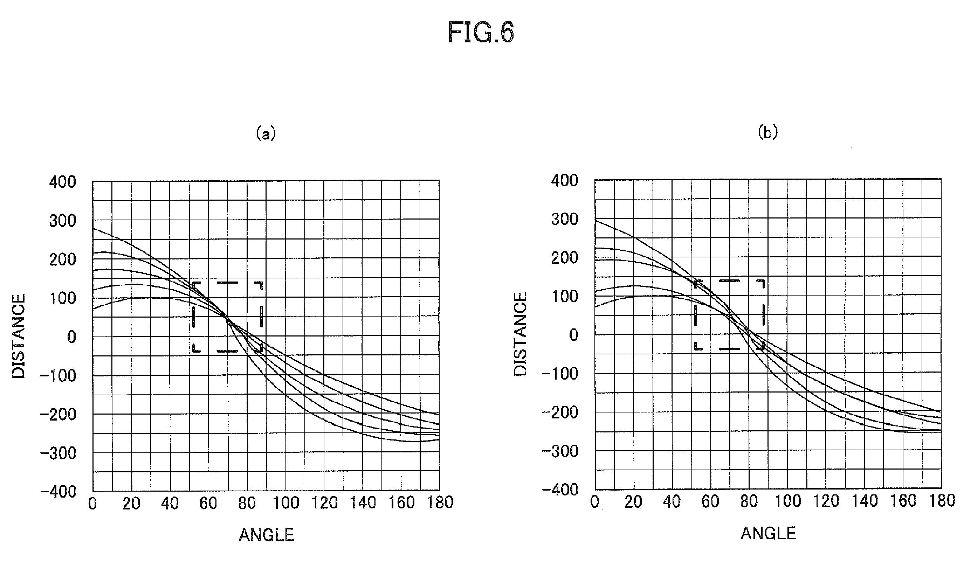

FIGs. 6 (a) and 6(b) are schematic drawings illustrating an ideal Hough straight line cluster and an actual Hough straight line cluster of points on the road in a Hough space, respectively.
In ideal cases, a flat road within the three-dimensional world strictly appears as a straight line in the V-disparity map, as illustrated in FIG. 6(a). However, in real cases, a flat road within the three-dimensional world does not strictly appear as a straight line, but is approximately located on a straight line. Considering the factor of the noise interference, the Hough straight line cluster (a cluster of the Hough straight lines) that is mapped from the points within the V-disparity map corresponding to the road, do not pass through a point with the parameter space of the Hough transform, but pass through a small area, as illustrated in FIG. 6(b).
In this case, it will cause the following problem, if the statistic is still obtained by an ordinary Hough transform based on a few points with the largest accumulated value so that weighted curves within the Hough parameter space intersect. If there is/are an isolated curve or several intersecting sparse curves with a high weight (for example, corresponding to an irrigation ditch within a road environment) in the Hough parameter space, and the isolated curve or several intersecting sparse curves has/have a large accumulated value; the straight line cluster within the Hough parameter space corresponding to the road appears as a form in which the straight line cluster concentrates but does not strictly pass through a point in the dotted rectangle of FIG. 6(b); therefore, the points (in the dotted rectangle of FIG. 6(b)) within the Hough parameter space that represent the real road will not be selected, if the accumulated values of the points (in the dotted rectangle of FIG. 6(b)) within the Hough parameter space that represent the real road are not greater than the accumulated value/values of the isolated curve or the several sparse curves.
In order to solve the above problem, according to the embodiment of the present invention, the step of estimating the road line segment by the limited Hough transform includes collecting straight lines that approximately pass through a point within a Hough parameter space by the following steps so as to reduce interference: scanning the Hough parameter space by a first window, accumulating the weight value of Hough curves within the first window, and setting the accumulated value to be the center of the first window, and scanning the Hough parameter space by a second window, searching for a point with a maximum accumulated weight value from the second window, retaining only the point and setting other points within the second window to zero. The sizes of the above first window and second window may be set according to a required accuracy and an actual condition of the road, or be set by learning.
In the above step in the embodiment of the present invention, the Hough straight line cluster that concentrates in the small area is accumulated (it is also be said to "collect") to be represented as a point, therefore the leakage of a selection can be avoided.

<2.6. Example 5: Simplification of Hough Straight Line Cluster>

In the Hough parameter space, there are many Hough straight line clusters, therefore it is necessary to perform the filtering of the Hough straight line clusters.
According to an embodiment of the present invention, the whole Hough accumulative space is searched to find a maximum value of the whole accumulated values, and a predetermined ratio of the maximum value is set as a dynamic threshold. A candidate Hough straight line cluster is filtered by the dynamic threshold so that only straight lines with an accumulated value greater than the dynamic threshold are retained.

Most of noise and edges of weak objects (such as parts corresponding to guardrails) can be removed by the clustering and simplification of the Hough transform straight line clusters according to the embodiment of the present invention.

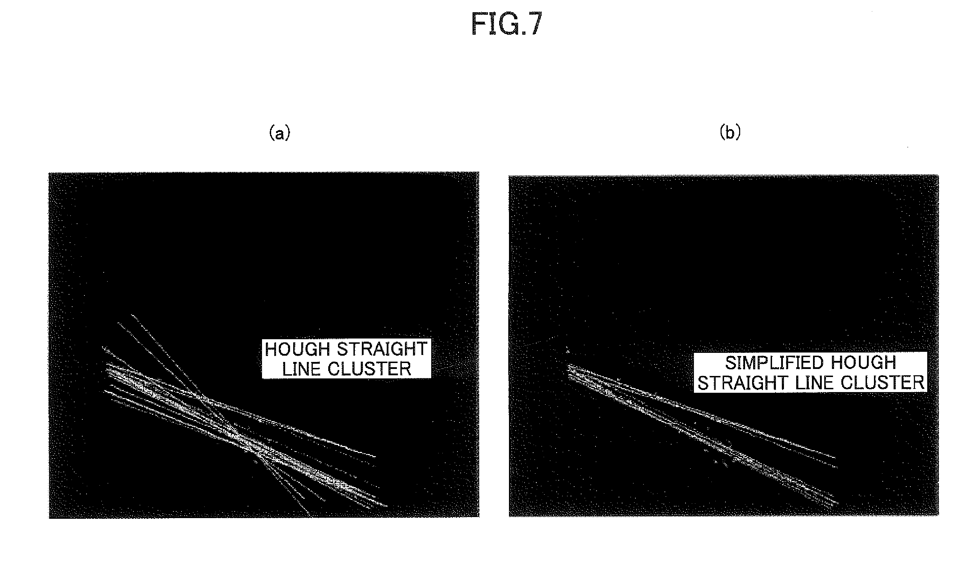

FIG. 7 is a schematic drawing illustrating a comparison of the Hough straight line cluster before and after clustering and simplifying processes. FIG. 7(a) represents the original Hough straight line cluster that has not had the clustering and simplifying processes performed, and FIG. 7(b) represents the Hough straight line cluster after the clustering and simplifying processes have been performed.

<2.7. Example 6: Selection of Hough Straight Line Based on Horizontal Distance>

In a real three-dimensional scene, a road is usually located at a lower position. In the V-disparity map after mapping, the side outline of the road is still located at the bottom of the image. Usually, since objects that are lower than the road are relatively weak (such as irrigation ditches), such objects can be removed by, for example, the clustering and the simplification of the Hough straight line clusters.

Therefore, according to the characteristics of the height of the road, a line segment that is located at the bottom of the V-disparity map may be selected as the straight line corresponding to the road from the line segments extracted by the Hough transform.

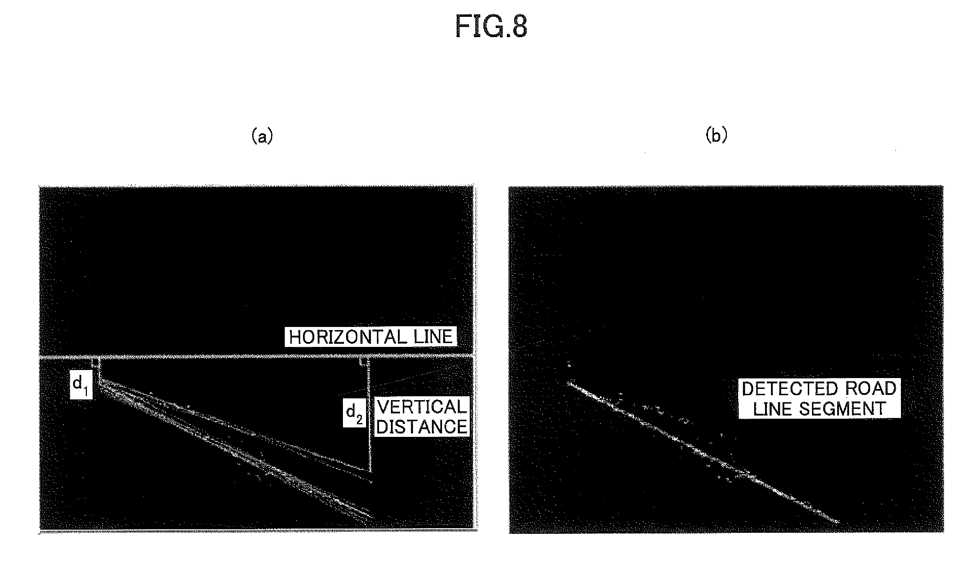

FIGs. 8(a) and 8(b) are schematic drawings illustrating calculation of the distance between the extracted Hough transform line segment and a horizontal plane corresponding line, and the selected road line segment according to an embodiment of the present invention, respectively.

According to an embodiment of the present invention, in order to measure the height of the line segment of the road, a horizontal plane with the same height as a binocular camera fixed on the vehicle is introduced. After a projection, the horizontal plane within the 3D space is mapped as a straight line within the V-disparity map (referred to hereinafter as a horizontal plane corresponding line). Specifically, if the optical axis of the binocular camera is parallel to the horizontal plane (that is to say, the pitching angle of the binocular camera with respect to the horizontal plane is zero), the horizontal plane of the 3D space appears as a horizontal line in the V-disparity map; otherwise, it is not a horizontal line, but inclines upward or downward according to the different pitching angles.

As illustrated in FIG. 8(a), in order to measure the distance between the line segment of the road and the horizontal plane corresponding line, a horizontal distance D is introduced. As an example, the horizontal distance D may be defined by the following equations:

$$D = \lambda d_1 + (1 - \lambda) d_2$$
$$d_1 = \frac{|Ax_1 + By_1 + C|}{\sqrt{A^2 + B^2}}, d_2 = \frac{|Ax_2 + By_2 + C|}{\sqrt{A^2 + B^2}}$$

, where A, B and C represent parameters of the horizontal plane corresponding line, (x1,y1) and (x2,y2) are coordinate values of respective ends of the line segments extracted by the Hough transform, and $\lambda$ is a weighting coefficient.

After the distance between the line segments extracted by the Hough transform and the horizontal plane corresponding line is calculated, in an embodiment, a line segment that is below the horizontal plane corresponding line and has a maximum distance from the horizontal plane corresponding line, may be selected as the road from the extracted line segments by the Hough transform. FIG. 8(b) illustrates the line segment of the road selected based on the distance.

In above sections 2.2 to 2.7, there are various examples of the limitation for the road detection by the Hough transform. It should be noted that various limiting ways may be used alone, and they may also be used by combining several or all limiting ways.

<3. Second Embodiment of Road Detection Method>

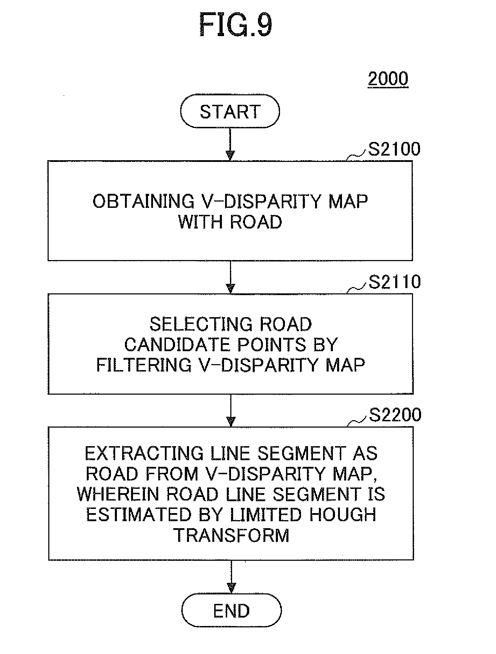

FIG. 9 is an overall flowchart illustrating the method for detecting the road 2000 according to an embodiment of the present invention.

The road detection method 2000 of the second embodiment is different from the road detection method 1000 of the first embodiment in that step S2110 is added. Steps S2100 and S2200 may refer to steps S1100 and S1200 illustrated in FIG. 1, and their descriptions are omitted here.

As illustrated in FIG. 9, in step S2110, the V-disparity map is filtered to select road candidate points.

If the line segments extraction is performed from the V-disparity map by the Hough transform without any processing, the noise will be high, the detection result will be inaccurate, and the computation complexity will be large.

According to an embodiment of the present invention, a filtering of the V-disparity map is performed and the road candidate points are selected, therefore invalid points can be removed, the computational efficiency can be improved, and the noise interference can be avoided.

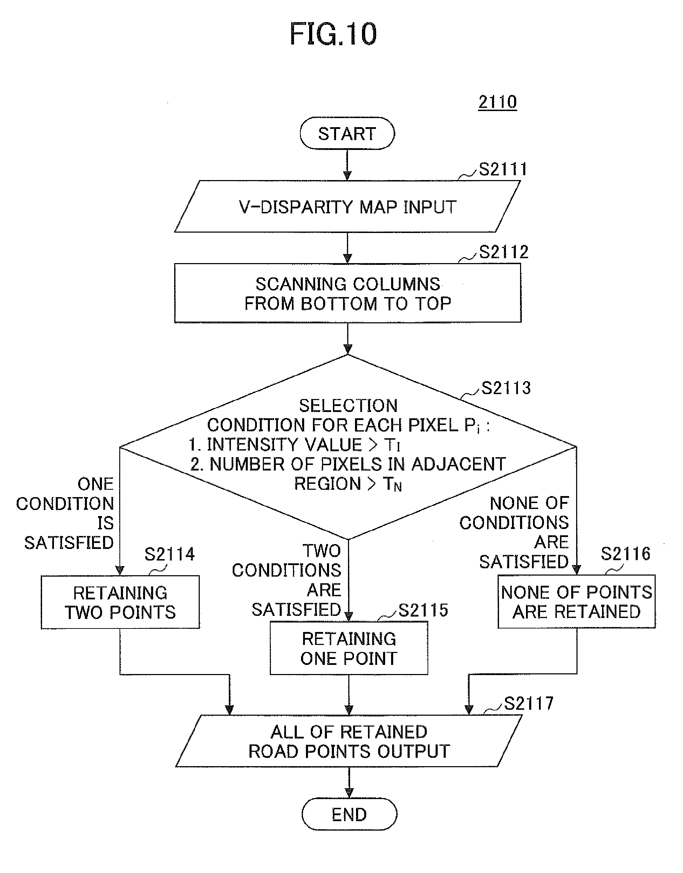

FIG. 10 is a flowchart illustrating the method of step 2110 of filtering the V-disparity map to select road candidate points according to an embodiment of the present invention.

In the following, the method of step 2110 of filtering the V-disparity map to select road candidate points according to an embodiment of the present invention is described with reference to FIG. 10. The method of step 2110 may be applied to step S2110 of FIG. 9.

As illustrated in FIG. 10, in step S2111, the V-disparity map is received as an input.

In step S2112, columns are scanned from bottom to top and the road candidate points are selected. As the reason, all of vehicles, buildings, passengers, etc., are higher than the road and the road points are usually located at the bottom after mapping; therefore the scanning order from bottom to top is consistent with the characteristic of the actual position of the road.

In step S2113, all of the pixels are classified as a road point or a background point according to a classification condition. Two judgment conditions are used for each of the pixels $P_i$: (1) intensity value of the pixel is greater than a predetermined intensity threshold $TI$; and (2) number of pixels in an adjacent region of the pixel is greater than a predetermined number threshold $TN$.

The road points are retained every column according to such conditions. The retaining rule is that zero, one, or two road candidate point(s) are retained every column according to the following cases.

Specifically, the retaining rule is that:

(1) not selecting any pixels from a column, if there is not a pixel that satisfies the condition 1 or condition 2 in the column (step S2116);
(2) retaining only a pixel for the column, if the pixel in the column scanned from bottom to top is the first pixel that satisfies both of two conditions (step S2115) ; and
(3) retaining a pixel, continuing the scan, searching for and retaining the second pixel that satisfies any one of the two conditions, if the pixel in a column scanned from bottom to top is the first pixel that satisfies any one condition only (step S2114).

In step S2117, all of the retained road points (pixels) are output or saved.

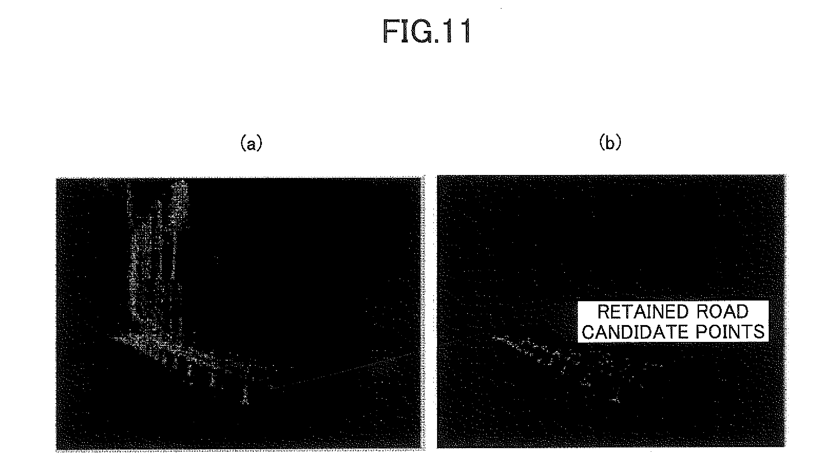

FIG. 11 is a schematic drawing illustrating the V-disparity map before and after filtering, where FIG. 11(a) is the V-disparity map before filtering, and FIG. 11(b) is the V-disparity map after filtering. From above, most of invalid points are removed and a few valid points are retained after the V-disparity map is filtered, therefore the computational complexity is reduced remarkably.

<4. Third Embodiment of Road Detection Method>

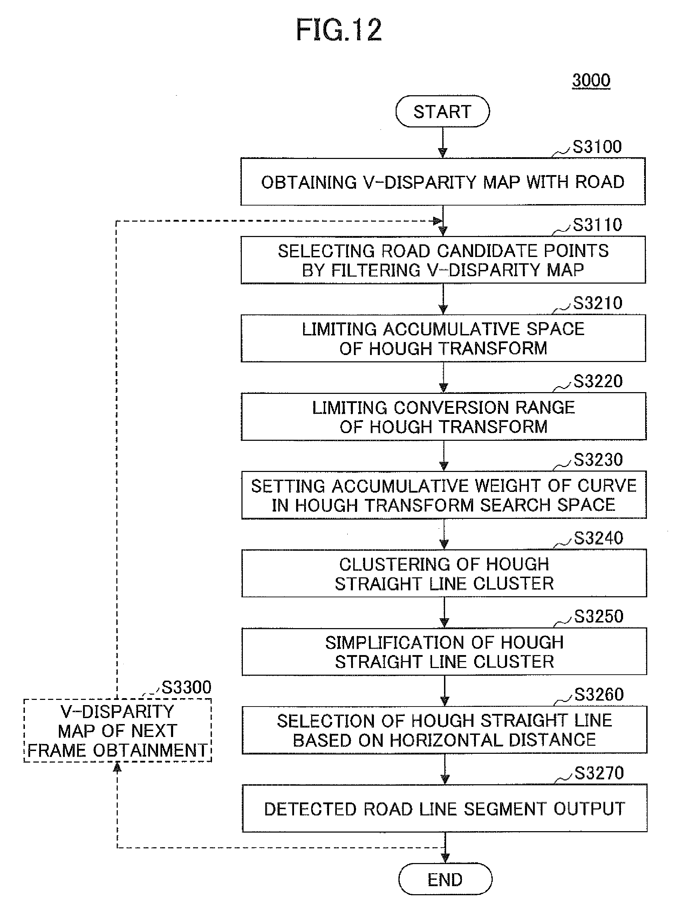

FIG. 12 is a flowchart illustrating the method for detecting the road according to the third embodiment of the present invention.

In the road detection method illustrated in FIG. 12, the obtained V-disparity map is filtered, the various limited Hough transforms are used, and the road detection of the V-disparity map of the next frame may be performed based on historical information optionally. The road detection method according to the third embodiment 3000 may be regarded as an optimization combination example of the road detection method 1000 according to the first embodiment and the road detection method 2000 according to the second embodiment.

Specifically, in step S3100, the V-disparity map with the road is obtained. The operation in Step S3100 may refer to step S1100 in the first embodiment.

In step S3110, the obtained V-disparity map is filtered and the road candidate points are selected. The operation in step S3110 may refer to step S2100 in the second embodiment.

In step S3210, as described in above section 2.2, the accumulative space of the Hough transform is limited.

In step S3220, as described in above section 2.3, the conversion range of the Hough transform is limited.

In step S3230, as described in above section 2.4, the accumulative weight of the Hough transform search space is set.

In step S3240, as described in above section 2.5, the Hough straight line cluster is clustered to collect straight lines that approximately pass through a point of the Hough parameter space so as to reduce the interference.

In step S3250, as described in above section 2.6, the simplification or selection of the Hough straight line cluster is performed.

In step S3260, as described in above section 2.7, it is determined whether the simplified Hough straight lines are located at the bottom or not, based on the distances between the straight lines and the horizontal plane corresponding line, and the straight line which is determined to be located at the bottom, is selected as the road straight line.

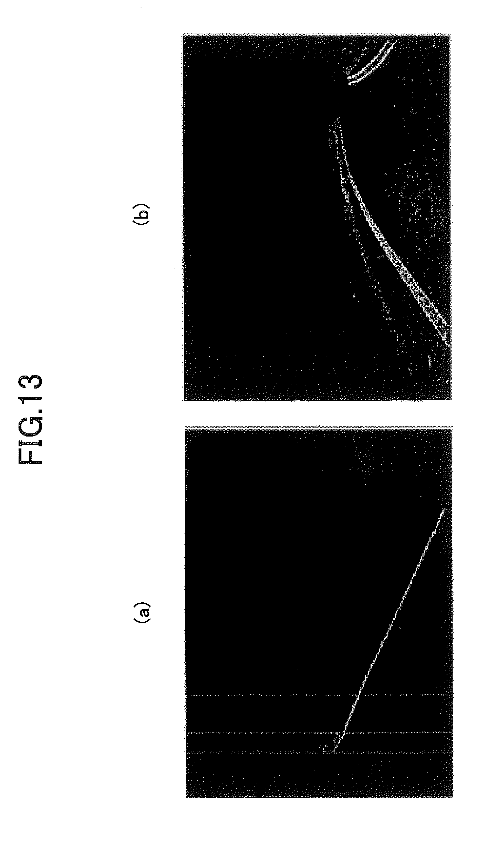

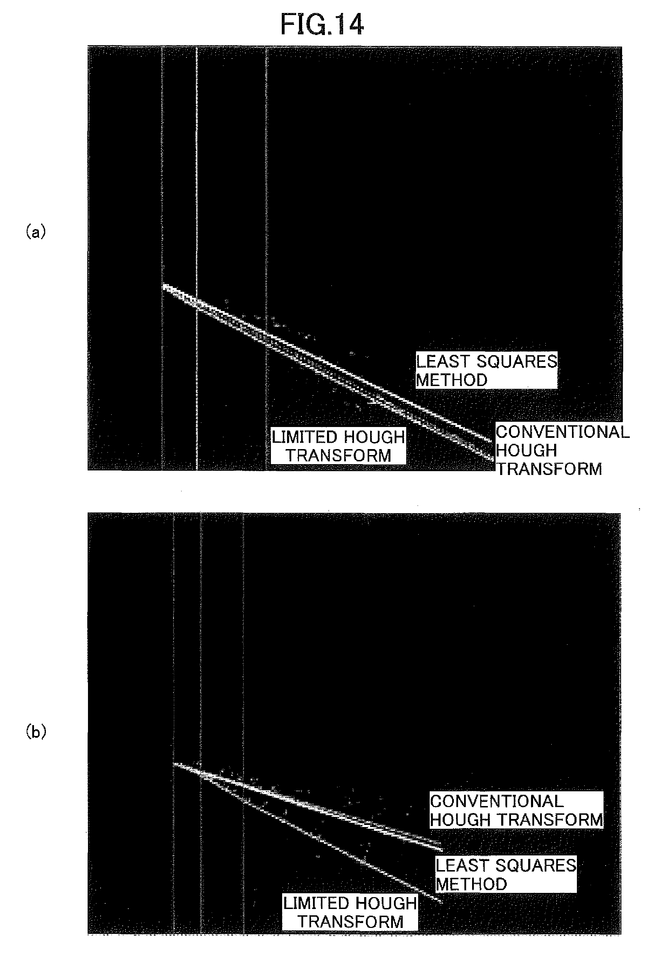

In step S3270, the detected road line segment is output. Step S3270 may simply output or display the road line segment in the V-disparity map. Alternatively, the V-disparity map may have an inverse transform performed to be returned into the disparity map to display the disparity map; in order to display the road in a gray-scale map more directly, it may even be mapped into the gray-scale map. FIGs. 13(a) and 13(b) are schematic drawings illustrating a road line segment detected from the V-disparity map and the corresponding road in the original disparity map by inverse mapping, respectively. FIG. 13(a) illustrates the road line segment detected from the V-disparity map, and FIG. 13(b) illustrates the corresponding road in the original disparity map by inverse mapping from the road line segment. Additionally, three vertical lines in FIG. 13(a) are used to illustrate three linear line segments in a near vision region, an intermediate vision region and a far vision region separately (three vertical lines in below FIG. 14(a) and 14(b) are the same).

Furthermore, as illustrated by the flow of the broken line in FIG. 12, the road detection of the next frame may be tracked by detecting the road line segment by the limited Hough transform according to an embodiment of the present invention. Specifically, for example, after the road line segment is detected from the V-disparity map of the current frame, in step S3300, the V-disparity map of the next frame is obtained and the process returns to step S3110. As a difference, as each of the subsequent limited Hough transform are applied to steps S3210 to S3260, the related parameters may refer to parameters obtained as the processing result of the previous frame. For example, in the frame n, parameters pn and θn of the road line segment are obtained; considering that the road may not change suddenly in the driving, in step S3210, the accumulative space of the Hough transform may be limited to the range given by $\rho n \pm \Delta \rho$ and $\theta n \pm \Delta \theta$.

FIGs. 14(a) and 14(b) are schematic drawings illustrating the comparison of experimental results of road detections where the road detection based on the limited Hough transform according to the embodiment of the present invention, and the least squares method, both applied to two road scenes. In FIG. 14(a), the three line segments in the direction from top to bottom of the drawing are road straight line is detected by a least squares method, a conventional Hough transform and a limited Hough transform according to the present invention. In FIG. 14(b), the three line segments in the direction from top to bottom of the drawing are road straight line is detected by a conventional Hough transform, a least squares method and a limited Hough transform according to the present invention. Comparing with the least squares method and the conventional Hough transform, the road straight line detection method based on the limited Hough transform according to the embodiment of the present invention detects the road more correctly; the present invention does not detect a straight line corresponding to points of the bottom (corresponding to a irrigation ditch in this example) or a straight line corresponding to points of the top (corresponding to a guardrail in this example) as the road, but correctly detects the road that is located at the bottom relatively.

In order to compare specifically, road points within the V-disparity map may be determined based on the road line segment detected from the V-disparity map, and be inverse mapped (be returned) into the original disparity map. Specifically, a road height (in the coordinates of the image) can be calculated from a distance (or disparity) d, according to the road line segment detected from the V-disparity map such as y=kd+b; therefore, all points with such height and distance can be determined from the original disparity map. FIGs. 15(a1), 15(b1), 15(c1), 15(a2), 15(b2) and 15(c2) are schematic drawings illustrating the comparison of original gray-scale maps, a road detected by the conventional detection method that is shown in an original disparity map, and a road detected by the method based on the limited Hough transform according to the embodiment of the present invention that is shown in the original disparity map. FIG. 15(a1) illustrates an original gray-scale map, FIG. 15(b1) illustrates the road detected by the conventional detection method that is shown in the original disparity map, and FIG. 15(c1) illustrates the road detected by the method based on the limited Hough transform according to the embodiment of the present invention that is shown in the original disparity map. Similarly, FIG. 15(a2) illustrates an original gray-scale map, FIG. 15(b2) illustrates the road detected by the conventional detection method that is shown in the original disparity map, and FIG. 15(c2) illustrates the road detected by the method based on the limited Hough transform according to the embodiment of the present invention that is shown in the original disparity map. As illustrated in FIG. 15(b1) a vehicle (illustrated as the part in the rectangular box) is not removed by the road detection of the conventional Hough transform, and as illustrated in FIG. 15(c1), the vehicle is removed from the result of the road detection by the limited Hough transform according to the embodiment of the present invention. Similarly, as illustrated in FIG. 15(b2), a guardrail (illustrated as the part in the rectangular box) by the road detection of the conventional Hough transform, and as illustrated in FIG. 15(c2), the guardrail is removed from the result of the road detection by the limited Hough transform according to the embodiment of the present invention. Additionally, as illustrated in FIG. 15(c1), a road side line is retained in the result of the road detection by the limited Hough transform according to the embodiment of the present invention. Furthermore, as illustrated in FIG. 15(c2), the road is enhanced in the result of the road detection by the limited Hough transform according to the embodiment of the present invention.

According to the method for detecting the road based on the limited Hough transform according to the first, second and third embodiments as described above, the noise can be removed, the computational complexity can be reduced, road points can be purposefully processed, the road can be enhanced, and the road can be detected accurately.

The road can be detected accurately by the road detection method according to the embodiments of the present invention; therefore, non-target objects and non-road areas can be removed by the road height in a subsequent detection and recognition.

Specifically, according to an embodiment, the accumulative space of the Hough transform is limited by the trace information and/or prior knowledge; thus, the noise is removed and the data volume is reduced.

According to another embodiment, the conversion process is accelerated by limiting the conversion range.

According to another embodiment, the accuracy of the algorithm is improved based on, for example, the accumulative weight set by the intensity value.

According to another embodiment, the adaptability and the robustness of the detection are enhanced by the clustering and simplification of the Hough straight line cluster.

According to another embodiment, the effect of guardrails, irrigation ditches and noise is reduced by the selection of the road straight lines based on the horizontal distance.

According to another embodiment, the effect of the noise is reduced and the computational complexity is reduced by filtering the V-disparity map and selecting the road candidate points.

<5. Road Detection Apparatus>

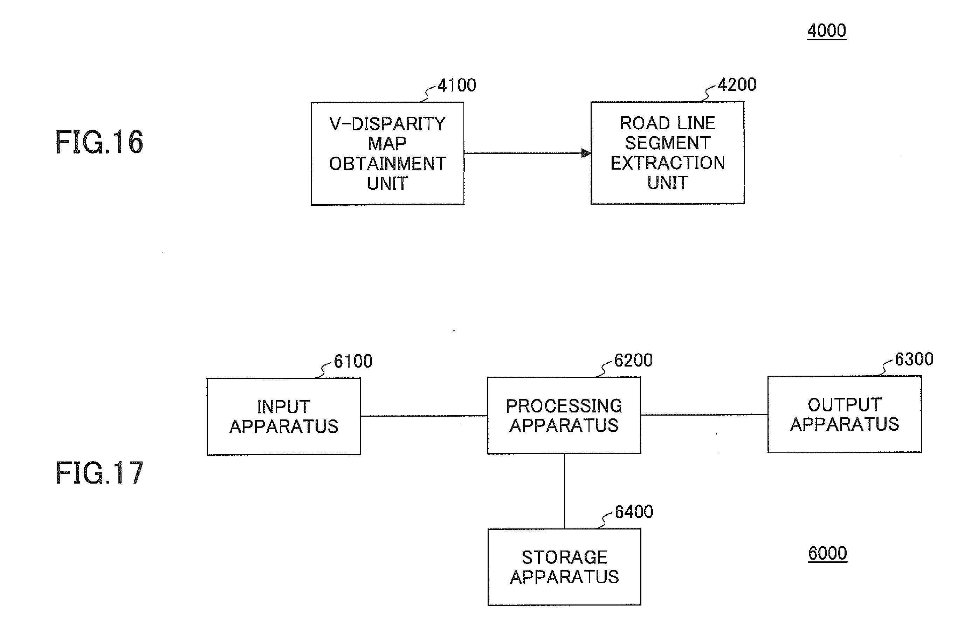

FIG. 16 is a block diagram illustrating an apparatus for detecting the road 4000 according to an embodiment of the present invention.

As illustrated in FIG. 16, the road detection apparatus 4000 may comprise: a V-disparity map obtainment unit 4100 configured to obtain a V-disparity map with the road; and a road line segment extraction unit 4200 configured to extract a line segment as the road from the V-disparity map, wherein the road line segment extraction unit estimates the road line segment by a limited Hough transform.

The operation of the units of the road detection apparatus 4000 may refer to the description illustrated in FIGs. 2, 8 and 11, and the description thereof is omitted here.

<6. System Hardware Configuration>

The present invention may be implemented as a system for detecting a road area and/or a road partition line. FIG. 17 is a conceptual diagram illustrating a hardware configuration of a road detection system according to the embodiments of the present invention. As illustrated in FIG. 17, the road detection system 6000 may comprise an input apparatus 6100 for inputting images for processing from the outside such as left and right images picked up by a binocular camera or a stereo video picked up by a stereo camera, for example, including a keyboard, a mouse, a communication network and a remote input device connected thereto, etc.; a processing apparatus 6200 for implementing the above road detection method and/or the road pixels filtration method according to the embodiments of the present invention, or being implemented as the above road detection apparatus according to the embodiments of the present invention, such as a CPU of a computer or other chips having processing ability, etc., that can be connected to a network (not shown) such as the Internet and obtain data such as the left and right images from the network based on the requirement of processing; an output apparatus 6300 for outputting the result obtained by implementing the above road detection procedure to the outside, such as a screen, a printer, a communication network and a remote output device connected thereto, etc.; and a storage apparatus 6400 for storing an image or information of a disparity map and a V-disparity map relating to the above detection process of the road, etc., by a volatile method or a nonvolatile method, such as various kinds of volatile or nonvolatile memory including a random-access memory (RAM), a read-only memory (ROM), a hard disk and a semiconductor memory.

<7. Summary>

The road detection method and the road detection apparatus are described above.

According to an aspect of the present invention, a method for detecting a road, may comprise the steps of: obtaining a V-disparity map with the road; and extracting a line segment as the road from the V-disparity map, wherein the step of extracting the line segment as the road from the V-disparity map includes estimating the road line segment by a limited Hough transform.

The V-disparity map with the road may be obtained from a stereo image picked up by a stereo camera fixed on a vehicle, and a region range and an inclination angle range within the V-disparity map where the road within the real three-dimensional environment is mapped may be determined based on a parameter of the camera. The step of estimating the road line segment by the limited Hough transform may include determining a parameter value range within a parameter space of the Hough transform of the line segment within the V-disparity map corresponding to the road, based on the region range and the inclination angle within the V-disparity map in which the road within the real three-dimensional environment is mapped. Accordingly, accumulative space of the Hough transform is limited by prior knowledge, the noise is removed and the data volume and the computational complexity are reduced.

According to another embodiment, an estimate may be provided for the detection of the road line segment of the next frame, based on the result of the road detection of the current frame. For example, the accumulative space of the Hough transform relating to the next frame is limited, thus the noise is removed, and the data volume and the computational complexity are reduced.

According to another embodiment, a polar coordinate function according to the Hough transform of the line segment within the V-disparity map corresponding to the road is denoted by the following equation

$$\rho = x \cdot \cos(\theta) + y \cdot \sin(\theta)$$

, where x represents abscissa of a point on the corresponding line segment within the V-disparity map and represents disparity value, y represents ordinate of the point on the corresponding line segment within the V-disparity map and represents the height in the image coordinates, and parameter values of the line segment within the V-disparity map corresponding to the road satisfy

$$x > 0, \quad y > 0, \quad \theta \in (\pi/2, \pi)$$

, so that, the following equation is derived

$$\frac{d\rho}{d\theta} = -x \cdot \sin(\theta) + y \cdot \cos(\theta) < 0$$

, namely, the polar coordinate function of the road within the V-disparity map is a monotone decreasing function in the parameter value range; therefore, based on the value range of p and θ,

a conversion of the Hough transform for a pixel is stopped and the next pixel within the V-disparity map is converted from an image space to a Hough space if p is less than a predetermined lower limit of the value range of p in cases where the pixel is converted by the Hough transform in the ascending order of θ, or a conversion of the Hough transform for a pixel is stopped and the next pixel within the V-disparity map is converted from an image space to a Hough space if p is greater than a predetermined upper limit of the value range of p in cases where the pixel is converted by the Hough transform in the descending order of θ, or

a conversion of the Hough transform for a pixel is stopped and the next pixel within the V-disparity map is converted from an image space to a Hough space if θ is less than a predetermined lower limit of the value range of θ in cases where the pixel is converted by the Hough transform in the ascending order of p, or a conversion of the Hough transform for a pixel is stopped and the next pixel within the V-disparity map is converted from an image space to a Hough space if θ is greater than a predetermined upper limit of the value range of θ in cases where the pixel is converted by the Hough transform in the descending order of p.

According to the above embodiment, the conversion range of the Hough transform is limited and the conversion process is accelerated.

According to another embodiment, the step of estimating the road line segment by the limited Hough transform may include setting an accumulative weight of a curve within a parameter space of the Hough transform that corresponds to a pixel within the V-disparity map, based on an intensity value of the pixel. Accordingly, the algorithm accuracy is improved.

According to another embodiment, the step of estimating the road line segment by the limited Hough transform may include collecting straight lines that approximately pass through a point within a Hough parameter space by the following steps so as to reduce interference, scanning the Hough parameter space by a first window, accumulating the weight value of Hough curves within the first window, and setting the accumulated value to the center of the first window;

and scanning the Hough parameter space by a second window, searching a point with a maximum accumulated weight value from the second window, and retaining only the point and setting other points within the second window to zero. According to the above operation called directly as the clustering of the Hough straight line cluster, the adaptability and the robustness of the detection can be enhanced, and the effect of noise such as guardrails or irrigation ditches can be reduced.

The step of estimating the road line segment by the limited Hough transform may further include searching the whole Hough accumulative space to find a maximum value of the whole accumulated values, setting a predetermined ratio of the maximum value as a dynamic threshold, and filtering a candidate Hough straight line cluster by the dynamic threshold so that only straight lines with an accumulated value greater than the dynamic threshold are retained. Accordingly, the adaptability and the robustness of the detection can be enhanced, and the effect of noise such as guardrails or irrigation ditches can be reduced.

According to an embodiment, the method for detecting a road may further comprise the step of selecting the lowest line segment of the V-disparity map as the road from the extracted line segments by the Hough transform by the following steps, obtaining a horizontal plane corresponding line corresponding to a horizontal plane within the V-disparity map with the same height as a binocular camera within the real three-dimensional environment, measuring the distances between the extracted line segments by the Hough transform and the horizontal plane corresponding line by the following equations

$$D = \lambda d_1 + (1-\lambda)d_2$$

$$d_1 = \frac{|Ax_1 + By_1 + C|}{\sqrt{A^2 + B^2}}, d_2 = \frac{|Ax_2 + By_2 + C|}{\sqrt{A^2 + B^2}}$$

, where A, B and C represent parameters of the horizontal plane corresponding line, (x1,y1) and (x2,y2) are coordinate values of both ends of the extracted line segments by the Hough transform, and $\lambda$ is a weighting coefficient, and selecting a line segment that is below the horizontal plane corresponding line and has a maximum distance from the horizontal plane corresponding line as the road from the extracted line segments by the Hough transform. Accordingly, the affect of noise such as guardrails is reduced.

Furthermore, according to an embodiment, the method for detecting a road may further comprise the step of filtering the V-disparity map to select road candidate points by the following steps, before the road line segment is estimated by the limited Hough transform, 1) scanning columns from bottom to top and judging whether each of pixels satisfies at least the following two conditions or not: condition 1, intensity value of the pixel is greater than a predetermined intensity threshold; and condition 2, number of pixels in an adjacent region of the pixel is greater than a predetermined number threshold, 2) not selecting any pixels from a column, if there is not a pixel that satisfies the condition 1 or condition 2 in the column, 3) stopping the scan of a column and retaining only a pixel for the column, if the pixel scanned from bottom to top in the column is the first pixel that satisfies both of two conditions, and 4) retaining a pixel, continuing the scan, searching and retaining a predetermined number of pixels that satisfy any one of the two conditions, if the pixel scanned from bottom to top in a column is the first pixel that satisfies any one condition only. According to the operation of selecting the road candidate points by filtering the V-disparity map, noise is removed remarkably and the computational complexity is reduced.

According to another aspect of the present invention, an apparatus for detecting a road, may comprise: a V-disparity map obtainment unit configured to obtain a V-disparity map with the road; and a road line segment extraction unit configured to extract a line segment as the road from the V-disparity map, wherein the road line segment extraction unit estimates the road line segment by a limited Hough transform.

The above descriptions of the embodiments are just examples, and various modifications, replacements or combinations may be made without departing 'from the scope of the present invention by persons skilled in the art.

For example, as described above, the V-disparity map is obtained by computing from the disparity map. However, it is apparent that the V-disparity map may be obtained by computing from left and right images picked up by a special camera such as a binocular camera, a multi camera or a stereo camera directly, or by computing from a depth map of a stereogram directly.

Furthermore, in the above embodiment, the vehicle moves forward and the front view of the vehicle is picked up by a binocular camera. However, the present invention may also be applied in reverse, namely, the rear view of the vehicle is picked up by a binocular camera and the road behind the vehicle is detected.

The basic principle of the present invention is described above with reference to the embodiments. Any one or all of the steps or units of the method or apparatus according to the present invention may be implemented by hardware, software or their combination in any one of computing devices (including a processor, a storage medium, etc.) or a network of computing devices, and it can be implemented by persons skilled in the art who have read the specification of the present application.

Therefore, the present invention may also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performing sequence is not limited to the time order. Any steps may be performed in parallel or independently.

The present invention is not limited to the specifically disclosed embodiments, and various modifications and replacements may be made without departing from the scope of the present invention.

The present application is based on and claims the benefit of priority of Chinese Priority Application No.201210513215.4 filed on December 4, 2012, the entire contents of which are hereby incorporated by reference.

**Claims**

1.  A method for detecting a road, comprising the steps of:

    obtaining a V-disparity map with the road; and
    extracting a line segment as the road from the V-disparity map,
    wherein the step of extracting the line segment as the road from the V-disparity map includes
    estimating the road line segment by a limited Hough transform.

2.  The method for detecting a road according to claim 1,
    wherein the V-disparity map with the road is obtained from a stereo image picked up by a stereo camera fixed on a vehicle, and a region range and an inclination angle range within the V-disparity map in which the road within the real three-dimensional environment is mapped are determined based on a parameter of the camera, and
    wherein the step of estimating the road line segment by the limited Hough transform includes
    determining a parameter value range within a parameter space of the Hough transform of the line segment within the V-disparity map corresponding to the road, based on the region range and the inclination angle within the V-disparity map in which the road within the real three-dimensional environment is mapped.

3.  The method for detecting a road according to claim 2,
    wherein a polar coordinate function according to the Hough transform of the line segment within the V-disparity map corresponding to the road is denoted by the following equation

    $$\rho = x \cdot \cos(\theta) + y \cdot \sin(\theta)$$

    , where x represents abscissa of a point on the corresponding line segment within the V-disparity map and represents a disparity value, y represents ordinate of the point on the corresponding line segment within the V-disparity map and represents the height in the image coordinates, and parameter values of the line segment within the V-disparity map corresponding to the road satisfy

    $$x > 0, \quad y > 0, \quad \theta \in (\pi/2, \pi)$$

    ,so that, the following equation is derived

$$\frac{d\rho}{d\theta} = -x \cdot \sin(\theta) + y \cdot \cos(\theta) < 0$$

, namely, the polar coordinate function of the road within the V-disparity map is a monotone decreasing function in the parameter value range, therefore, based on the value range of p and θ,

a conversion of the Hough transform for a pixel is stopped and the next pixel within the V-disparity map is converted from an image space to a Hough space if p is less than a predetermined lower limit of the value range of p in cases where the pixel is converted by the' Hough transform in the ascending order of θ, or a conversion of the Hough transform for a pixel is stopped and the next pixel within the V-disparity map is converted from an images space to a Hough space if p is greater than a predetermined upper limit of the value range of p in cases where the pixel is converted by the Hough transform in the descending order of θ, or

a conversion of the Hough transform for a pixel is stopped and the next pixel within the V-disparity map is converted from an image space to a Hough space if θ is less than a predetermined lower limit of the value range of θ in cases where the pixel is converted by the Hough transform in the ascending order of p, or a conversion of the Hough transform for a pixel is stopped and the next pixel within the V-disparity map is converted from an image space to a Hough space if θ is greater than a predetermined upper limit of the value range of θ in cases where the pixel is converted by the Hough transform in the descending order of p.

4. The method for detecting a road according to claim 1, wherein the step of estimating the road line segment by the limited Hough transform includes

setting an accumulative weight of a curve within a parameter space of the Hough transform that corresponds to a pixel within the V-disparity map, based on an intensity value of the pixel.

5. The method for detecting a road according to claim 1, wherein the step of estimating the road line segment by the limited Hough transform includes collecting straight lines that approximately pass through a point within a Hough parameter space by the following steps so as to reduce interference,

scanning the Hough parameter space by a first window, accumulating the weight value of Hough curves within the first window, and setting the accumulated value to be the center of the first window, and

scanning the Hough parameter space by a second window, searching for a point with a maximum accumulated weight value in the second window, retaining only the point and setting other points within the second window to zero.

6. The method for detecting a road according to claim 5, wherein the step of estimating the road line segment by the limited Hough transform further includes

searching a Hough accumulative space to find a maximum value of the accumulated values, setting a predetermined ratio of the maximum value as a dynamic threshold, and filtering a candidate Hough straight line cluster by the dynamic threshold so that only straight lines with an accumulated value greater than the dynamic threshold are retained.

7. The method for detecting a road according to claim 1, further comprising the step of selecting a lowest line segment of the V-disparity map as the road from the line segments extracted by the Hough transform by the following steps, obtaining a horizontal plane corresponding line corresponding to a horizontal plane with the same height as a binocular camera within a real three-dimensional environment from the V-disparity, map,

measuring the distances between the line segments extracted by the Hough transform and the horizontal plane corresponding line by the following equations

$$D = \lambda d_1 + (1 - \lambda)d_2$$

$$d_1 = \frac{|Ax_1 + By_1 + C|}{\sqrt{A^2 + B^2}}, d_2 = \frac{|Ax_2 + By_2 + C|}{\sqrt{A^2 + B^2}}$$

, where A, B and C represent parameters of the horizontal plane corresponding line, (x1,y1) and (x2,y2) are coordinate values of both ends of the line segments extracted by the Hough transform, and λ is a weighting coefficient, and selecting a line segment that is below the horizontal plane corresponding line and has a maximum distance from the horizontal plane corresponding line as the road from the line segments extracted by the Hough transform.

8. The method for detecting a road according to claim 1, further comprising the step of filtering the V-disparity map to select road candidate points by the following steps, before the road line segment is estimated by the limited Hough transform,

1) scanning columns from bottom to top and determining whether each of pixels satisfies at least the following two conditions or not: condition 1, intensity value of the pixel is greater than a predetermined intensity threshold; and condition 2, number of pixels in an adjacent region of the pixel is greater than a predetermined number threshold,
2) not selecting any pixels from a column, if there is not a pixel that satisfies the condition 1 or condition 2 in the column,
3) stopping the scan of a column and retaining only a pixel for the column, if the pixel in the column scanned from bottom to top is the first pixel that satisfies both of the two conditions, and
4) retaining a pixel, continuing the scan, searching for and retaining a predetermined number of pixels that satisfy any one of the two conditions, if the pixel in a column scanned from bottom to top is the first pixel that satisfies any one condition only.

9. The method for detecting a road according to claim 1, wherein the step of extracting the line segment as the road from the V-disparity map includes

extracting the segmented line segments as the road from the V-disparity map in descending order of the disparity, wherein the line segments are obtained by estimating by the limited Hough transform, and an initial straight line parameter of the subsequent line segment is limited by an estimated straight line parameter of the previous line segment.

10. An apparatus for detecting a road, comprising:

a V-disparity map obtainment unit configured to obtain a V-disparity map with the road; and
a road line segment extraction unit configured to extract a line segment as the road from the V-disparity map,
wherein the road line segment extraction unit estimates the road line segment by a limited Hough transform.

11. The apparatus for detecting a road according to claim 10,
wherein the V-disparity map with the road is obtained from a stereo image picked up by a stereo camera fixed on a vehicle, and a region range and an inclination angle range within the V-disparity map in which the road within the real three-dimensional environment is mapped are determined based on a parameter of the camera, and
wherein the road line segment extraction unit determines a parameter value range within a parameter space of the Hough transform of the line segment within the V-disparity map corresponding to the road, based on the region range and the inclination angle within the V-disparity map in which the road within the real three-dimensional environment is mapped.

12. The apparatus for detecting a road according to claim 11,
wherein a polar coordinate function according to the Hough transform of the line segment within the V-disparity map corresponding to the road is denoted by the following equation

$$\rho = x \cdot \cos(\theta) + y \cdot \sin(\theta)$$

, where x represents abscissa of a point on the corresponding line segment within the V-disparity map and represents a disparity value, y represents ordinate of the point on the corresponding line segment within the V-disparity map and represents the height in the image coordinates, and parameter values of the line segment within the V-disparity map corresponding to the road satisfy

$$x > 0, \quad y > 0, \quad \theta \in (\pi/2, \pi)$$

, so that, the following equation is derived

$$\frac{d\rho}{d\theta} = -x \cdot \sin(\theta) + y \cdot \cos(\theta) < 0$$

, namely, the polar coordinate function of the road within the V-disparity map is a monotone decreasing function in the parameter value range, therefore, based on the value range of $\rho$ and $\theta$,

a conversion of the Hough transform for a pixel is stopped and the next pixel within the V-disparity map is converted from an image space to a Hough space if p is less than a predetermined lower limit of the value range of p in cases where the pixel is converted by the Hough transform in the ascending order of $\theta$, or a conversion of the Hough transform for a pixel is stopped and the next pixel within the V-disparity map is converted from an image space to a Hough space if p is greater than a predetermined upper limit of the value range of p in cases where the pixel is converted by the Hough transform in the descending order of $\theta$, or

a conversion of the Hough transform for a pixel is stopped and the next pixel within the V-disparity map is converted from an image space to a Hough space if $\theta$ is less than a predetermined lower limit of the value range of $\theta$ in cases where the pixel is converted by the Hough transform in the ascending order of p, or a conversion of the Hough transform for a pixel is stopped and the next pixel within the V-disparity map is converted from an image space to a Hough space if $\theta$ is greater than a predetermined upper limit of the value range of $\theta$ in cases where the pixel is converted by the Hough transform in the descending order of p.

13. The apparatus for detecting a road according to claim 10, wherein the road line segment extraction unit sets an accumulative weight of a curve within a parameter space of the Hough transform that corresponds to a pixel within the V-disparity map, based on an intensity value of the pixel.

14. The apparatus for detecting a road according to claim 10, wherein the road line segment extraction unit collects straight lines that approximately pass through a point within a Hough parameter space by the following steps so as to reduce interference,

scanning the Hough parameter space by a first window, accumulating the weight value of Hough curves within the first window, and setting the accumulated value to be the center of the first window, and

scanning the Hough parameter space by a second window, searching for a point with a maximum accumulated weight value in the second window, retaining only the point and setting other points within the second window to zero.

15. The apparatus for detecting a road according to claim 14, wherein the road line segment extraction unit searches a Hough accumulative space to find a maximum value of the whole accumulated values, sets a predetermined ratio of the maximum value as a dynamic threshold, and filters a candidate Hough straight line cluster by the dynamic threshold so that only straight lines with an accumulated value greater than the dynamic threshold are retained.

FIG.1

| DRIVING ASSISTANCE SYSTEM |
|---|
| ROAD RELATED PART |

LANE/ ROAD DETECTION WARNING SYSTEM

ROAD DETECTION UNIT

# FIG.2

1000

START

S1100

OBTAINING V-DISPARITY MAP
WITH ROAD

S1200

EXTRACTING LINE SEGMENT AS
ROAD FROM V-DISPARITY MAP,
WHEREIN ROAD LINE SEGMENT IS
ESTIMATED BY LIMITED HOUGH
TRANSFORM

END

# FIG.3

(a)                                          (b)

# FIG.4

FAR
VISION
REGION

INTERMEDIATE
VISION REGION

NEAR VISION
REGION

# FIG.5

# FIG.6

(a)

(b)

EP 2 741 233 A2

FIG.7

(a)

(b)

HOUGH STRAIGHT
LINE CLUSTER

SIMPLIFIED HOUGH
STRAIGHT LINE CLUSTER

EP 2 741 233 A2

# FIG.8

(a)

(b)

(a) HORIZONTAL LINE, $d_1$, $d_2$, VERTICAL DISTANCE

(b) DETECTED ROAD LINE SEGMENT

# FIG.9

2000

START

S2100

OBTAINING V-DISPARITY MAP
WITH ROAD

S2110

SELECTING ROAD
CANDIDATE POINTS BY
FILTERING V-DISPARITY MAP

S2200

EXTRACTING LINE SEGMENT AS
ROAD FROM V-DISPARITY MAP,
WHEREIN ROAD LINE SEGMENT IS
ESTIMATED BY LIMITED HOUGH
TRANSFORM

END

# FIG.10

2110

START

S2111

V-DISPARITY MAP INPUT

S2112

SCANNING COLUMNS
FROM BOTTOM TO TOP

S2113

SELECTION
CONDITION FOR EACH PIXEL $P_i$ :
1. INTENSITY VALUE $> T_I$
2. NUMBER OF PIXELS IN ADJACENT
REGION $> T_N$

ONE
CONDITION
IS
SATISFIED

S2114

RETAINING
TWO POINTS

TWO
CONDITIONS
ARE
SATISFIED

S2115

RETAINING
ONE POINT

NONE OF
CONDITIONS
ARE
SATISFIED

S2116

NONE OF POINTS
ARE RETAINED

S2117

ALL OF RETAINED
ROAD POINTS OUTPUT

END

# FIG.11

(a)

(b)

RETAINED ROAD
CANDIDATE POINTS

EP 2 741 233 A2

# FIG.12

3000

START

↓ S3100

OBTAINING V-DISPARITY MAP WITH ROAD

↓ S3110

SELECTING ROAD CANDIDATE POINTS
BY FILTERING V-DISPARITY MAP

↓ S3210

LIMITING ACCUMULATIVE SPACE
OF HOUGH TRANSFORM

↓ S3220

LIMITING CONVERSION RANGE
OF HOUGH TRANSFORM

↓ S3230

SETTING ACCUMULATIVE WEIGHT OF CURVE
IN HOUGH TRANSFORM SEARCH SPACE

↓ S3240

CLUSTERING OF HOUGH
STRAIGHT LINE CLUSTER

↓ S3250

SIMPLIFICATION OF HOUGH
STRAIGHT LINE CLUSTER

↓ S3260

SELECTION OF HOUGH STRAIGHT LINE
BASED ON HORIZONTAL DISTANCE

↓ S3270

DETECTED ROAD LINE SEGMENT OUTPUT

↓

END

S3300

V-DISPARITY
MAP OF NEXT
FRAME OBTAINMENT

FIG.13

(a)   (b)

# FIG.14

(a)

LEAST SQUARES METHOD

LIMITED HOUGH TRANSFORM

CONVENTIONAL HOUGH TRANSFORM

(b)

CONVENTIONAL HOUGH TRANSFORM

LEAST SQUARES METHOD

LIMITED HOUGH TRANSFORM

# FIG.15

(a1)

(b1)

VEHICLE REMOVAL

(c1)

ROAD SIDE LINE RETAINMENT

(a2)

(b2)

BUSHES REMOVAL

(c2)

ROAD ENHANCEMENT

EP 2 741 233 A2

FIG.16

~4100

V-DISPARITY
MAP
OBTAINMENT
UNIT

~4200

ROAD LINE
SEGMENT
EXTRACTION
UNIT

4000

FIG.17

~6100

INPUT
APPARATUS

~6200

PROCESSING
APPARATUS

~6300

OUTPUT
APPARATUS

~6400

STORAGE
APPARATUS

6000

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 762326 B1
- CN 201110434873X
- CN 201210194074
- CN 201210513215

**Non-patent literature cited in the description**

- **Y.GAO ; X.AI ; Y.WANG ; J.RARITY ; N.DAH-NOUN.** U-V-Disparity based Obstacle Detection with 3D Camera and Steerable Filter. *IEEE Intelligent Vehicles Symposium,* 2011